# EUROPEAN PATENT SPECIFICATION

(11) **EP 2 770 236 B1**
(45) Date of publication and mention of the grant of the patent: **09.12.2015**
(21) Application number: 14156525.9
(22) Date of filing: 25.02.2014
(51) Int. Cl.: F16K 1/226, F16K 25/02, F16K 25/00

(54) **Butterfly valve**
Drosselventil
Vanne papillon

(30) Priority: 26.02.2013 GB 201303359
(43) Date of publication of application: 27.08.2014
(73) Proprietor: Severn Glocon Limited, Gloucester, Gloucestershire GL2 4NF (GB)
(72) Inventor: Breese, Mark, Quedgeley, Gloucestershire GL2 4NF (GB); Burns, George, Quedgeley, Gloucestershire GL2 4NF (GB); Walker, Simon, Quedgeley, Gloucestershire GL2 4NF (GB)
(74) Representative: Oxley, Robin John George

(56) References cited:
- CH-A5- 603 175
- DE-A1- 3 509 352
- US-A- 4 318 422
- US-A- 4 527 771
- US-A- 6 149 130

## Description

This invention relates to a butterfly valve, and in particular to a butterfly valve adapted to allow the continued sealing thereof after parts of the butterfly valve have become worn.

Butterfly valves are of well known form (see for instance US-A-6 149 130) , comprising a disc supported within a flow passage so as to be angularly moveable between an open position in which the plane of the disc lies approximately parallel to the fluid flow direction along the passage, fluid flowing on both sides of the disc, and a closed position in which the disc substantially closes the flow passage. In the closed position, the periphery of the disc engages an annular seat provided in the flow passage, forming a seal between the disc and the flow passage with the result that fluid flow along the passage ceases.

Over time, the sealing surface of the valve seat may become worn or damaged. Likewise, the corresponding parts of the disc may become worn or damaged. Such wear may arise from, for example, the presence of abrasive particles in the fluid flow along the flow passage. Such wear or damage may prevent the valve, when in its closed position, fully sealing the flow passage. Depending upon the application in which the valve is used, leakage of fluid past the valve, even at a very low rate, when the valve is closed, may not be acceptable. In such circumstances, the valve will need to be removed and replaced or repaired. This may involve significant disruption to the operation of associated equipment.

It is known, for example with ball and plug valves, to introduce a sealant liquid into a cavity within the valve between the seats thereof, when the valve is closed, to fully seal the valve when the valve has become damaged or worn and is unable to fully seal in the usual manner. In butterfly valves, no such cavity is present and so this sealing technique has not been employed. Instead, it has been known, in butterfly valves, to introduce a liquid sealant behind the seat of the valve to pressurise the seat against the valve disc and to fill any cavities therebetween in the event of damage or wear thereto.

It is also known, in butterfly valves, to design the valve disc and valve seat in such a manner that two spaced seals are formed therebetween, a bleed port communicating with the void therebetween which can be used to ascertain information about the integrity of the seals.

It is an object of the invention to provide a butterfly valve with a secondary sealing arrangement.

According to the invention there is provided a butterfly valve comprising a valve disc located within a flow passage provided in a housing and engageable with a seat provided within the housing, the valve disc and the housing cooperating with one another,

when the valve disc occupies a closed position, to define an annular void extending around the periphery of the valve disc at a position spaced from the seat, an inlet port and an outlet port communicating with the void to allow the supply of sealant to the void to form a seal between the valve disc and the housing.

With such an arrangement, in the event that the butterfly valve becomes damaged or worn with the result that it no longer fully seals, when the valve occupies its closed position a liquid sealant can be injected into the void, substantially filling the void and sealing the valve disc to the housing. Accordingly, the valve incorporates a secondary sealing arrangement. Subsequently, the valve can be opened substantially as normal, and on each occasion that the valve is closed, the process of injecting or introducing the sealant into the void is repeated. In this manner, the valve can continue to operate until a convenient opportunity to remove and repair or replace the valve arises. The need to unexpectedly shut down the equipment with which the valve is used can thus be avoided.

As the secondary sealing arrangement provided by the invention is independent of the seat, it will be appreciated that wear or damage to the seat has no impact upon the operation of the secondary sealing arrangement. The risk of such wear or damage preventing the operation of the secondary sealing arrangement is thus minimised.

The valve disc is conveniently supported and moved by a control shaft. The axis of the control shaft is conveniently spaced from a plane containing the void. As a result, the design of the features which, together, cooperate to define the void can be simplified.

The control shaft is preferably offset from the diameter of the flow passage such that the application of fluid under pressure to the flow passage applies a load to the valve disc, when the valve disc approaches its closed position, urging the valve disc towards its closed position. The void is preferably designed and positioned such that the action of urging the valve disc towards its closed position pressurises the sealant within the void, enhancing the sealing effect provided thereby. Furthermore, fluid under pressure may be able to act directly upon the sealant, pressurising it and urging it against the valve disc and housing, further enhancing the sealing effect.

The invention will further be described, by way of example, with reference to the accompanying drawings, in which:
Figure 1 is a perspective view of a butterfly valve in accordance with one embodiment of the invention;
Figure 2 is a diagrammatic view illustrating the operation of the invention;
Figures 3 and 4 are sectional views illustrating the embodiment of Figure 1 in greater detail; and
Figures 5 to 7 are views similar to Figure 4 illustrating some alternative embodiments.

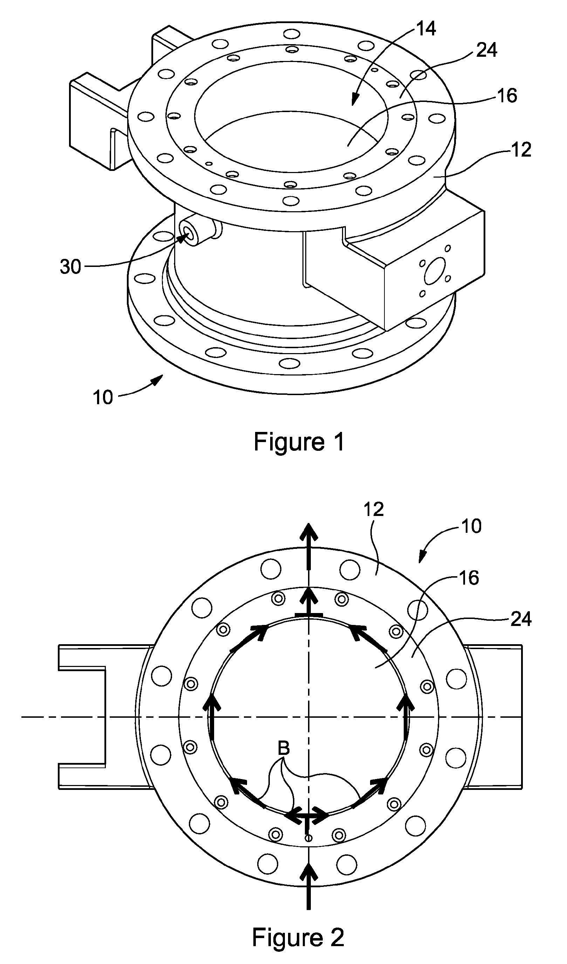

Referring firstly to Figures 1 to 4, a butterfly valve 10 is illustrated which comprises a housing 12 defining a fluid flow passage 14. A valve member in the form of a valve disc 16 is located within the flow passage 14. The valve disc 16 is carried upon a control shaft 18 which extends into the housing 12. A suitable drive arrangement (not shown) controls the angular position of the control shaft 18, and hence the valve disc 16. The drive arrangement also limits the range of movement of the valve disc 16.

The flow passage 14 is of stepped form and defines a shoulder 20 against which a seat 22 abuts, a clamp member 24 forming part of the housing 12 being located to secure the seat 22 in position and apply a compressive load thereto. The seat 22 may be of, for example, polymer, metallic or laminated form.

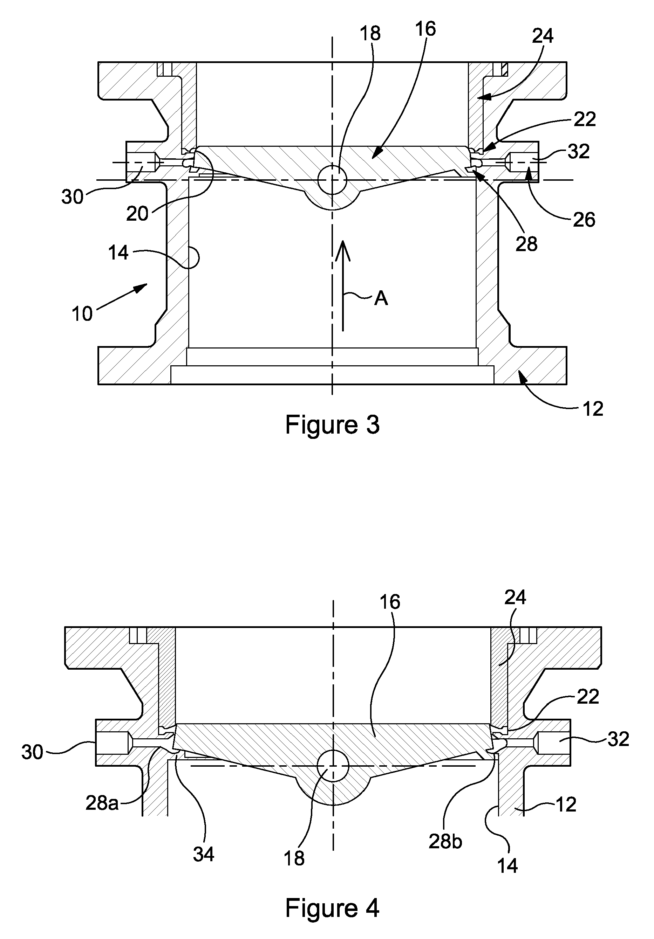

In use, the valve controls the flow of fluid along the flow passage 14 in the direction of arrow A in Figure 3. When the valve occupies the closed position shown in Figures 3 and 4, flow is not permitted, the valve disc 16 engaging with the seat 22 about the entire periphery of the valve disc 16. Angular movement of the valve disc 14 about the axis of the control shaft 18 under the control of the associated drive arrangement disengages the valve disc 16 from the seat 22 and permits fluid flow along the flow passage 14, the fluid flowing to either side of the valve disc 16. It will be appreciated that the valve disc 16 moves through an angle of approximately 90° in moving from its closed position to a fully open position in which the valve forms a relatively small restriction to fluid flow along the flow passage 14.

As discussed hereinbefore, wear or damage to the valve seat 22 or the parts of the valve disc 16 which engage the valve seat 22, can result in fluid still being able to leak past the valve even when the valve occupies its fully closed position. Such leakage is undesirable and, in a number of applications, such leakage may not be permitted.

In accordance with the invention, therefore, the valve is provided with a secondary sealing arrangement 26. The secondary sealing arrangement 26 comprises, in this embodiment, formations provided on both the valve disc 16 and the housing 12 which, together, define an annular void 28 extending about the full periphery of the valve disc 22, and an inlet port 30 and an outlet port 32, both of which communicate with the void 28.

In use, if it is determined that the valve has become worn, and hence that the secondary sealing arrangement needs to be used to achieve sealing of the valve in its closed position, once the valve disc 16 has been moved to its closed position, a suitable viscous liquid sealant is supplied, under pressure, to the inlet port 30. The liquid sealant flows into and around the void 28, for example following the path indicated by the arrows B in Figure 2, subsequently exiting via the outlet port 32. The presence of the sealant within the void 28 forms a leak tight seal between the valve disc 16 and the housing 12, closing the flow passage 14 and so preventing fluid flow along the flow passage 14 and leakage past the valve.

The sealant may comprise, for example a sealant product supplied by Seaweld.

It will be appreciated that the secondary sealing arrangement is independent of the valve seat 22, and hence that any damage or wear thereto has no impact upon the operation of the secondary sealing arrangement or the effectiveness of the seal formed thereby. Furthermore, it can be designed to form a relatively small restriction to flow, thereby allowing a relatively viscous sealant to be easily and efficiently supplied to and around the void 28.

Should, subsequently, the valve need to be reopened, the valve disc 16 is driven to its open position in the usual way. Each subsequent closing operation is accompanied by a reintroduction of sealant into the void 28 to ensure that the integrity of the seal is maintained. If desired, the liquid sealant can be flushed from the void 28 prior to opening of the valve by the application of a suitable flushing liquid to one of the ports 30,32.

It will be appreciated that the valve can continue to function in this manner, using the secondary sealing arrangement to achieve a leak tight seal, until such time as it is convenient to remove and replace or repair the valve. The need to take the valve out of service, accompanied by shutting down of the associated equipment, unexpectedly can thus be avoided.

In the arrangement of Figures 1 to 4, the void 28 is defined by formations provided on both the valve disc 16 and on the housing 12. It includes an annular groove formed in the housing 12. In addition, approximately 50% of the peripheral extent of the void 28 is further defined by a recess 28a formed behind a stop 34 provided on the housing 12 which prevents over movement of the valve disc 16, the remainder of the peripheral extent of the void 28 being defined by a groove 28b formed in the valve disc 16. Where abrasive particles are supplied along the flow passage 14, in use, and the flow passage 14 extends substantially horizontally, the stop 34 is conveniently provided around the lower half of the flow passage 14, thereby reducing the impact of the particles with the seat 22, and so reducing wear thereof.

The design shown in Figures 3 and 4 allows a relatively large bead of sealant to be formed, reducing the risk of leakage of fluid past the valve.

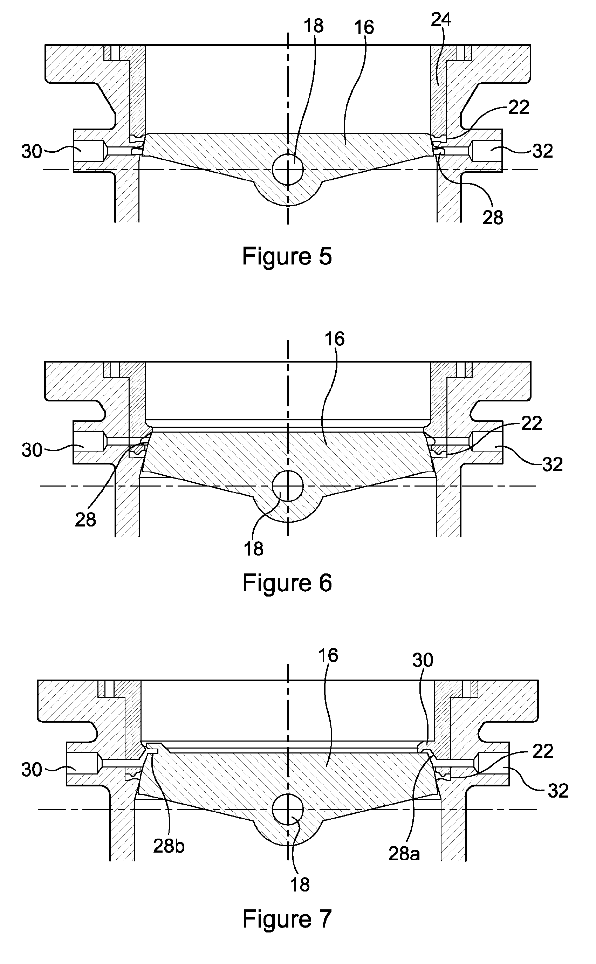

The arrangement of Figure 5 differs from that of Figures 1 to 4 in that the void 28 is formed by an annular groove formed only in the housing 12.

In both of the arrangements described hereinbefore, the secondary sealing arrangement is located upstream of the seat 22. This is thought to be advantageous in that the fluid pressure within the flow passage 14 may be able to act upon the liquid sealant, when the secondary sealing arrangement is in use, pressurising the liquid sealant and thereby assisting in ensuring that the liquid sealant is in intimate contact with both the valve disc 16 and the housing 12, thereby enhancing the sealing effect provided by the secondary sealing arrangement. However, this need not always be the case, and Figures 6 and 7 illustrate alternative arrangements in which the secondary sealing arrangement is located downstream of the seat 22. In the Figure 6 arrangement, the void 28 is defined by an annular recess formed in the clamp member 24, which is rigidly secured to and forms part of the housing 12, Figure 7 illustrating an arrangement in which the void 28 is defined in part within the valve disc 16 and in part by a groove located in a stop 34 in a manner similar to that shown in Figure 4.

If desired, two voids 28 may be provided, for example one may be provided upstream of the seat 22 and the other located downstream of the seat 22.

In each of the arrangements described hereinbefore, the control shaft 18 is offset from

the diameter of the flow passage 14 with the result that, as the valve disc 16 approaches its closed position, the fluid pressure acting upon the valve disc 16 applies a force to the valve disc 16 urging the valve disc towards its fully closed position. It will be appreciated that in the arrangements of at least Figures 1 to 4 and 7 this may further serve to pressurise the liquid sealant and so further serves to enhance the sealing effect.

The axis of the control shaft 18 is conveniently spaced from the plane of the annular void 28 as this simplifies the design of the valve disc 16 and the associated formations defining the void 28, avoiding the need to shape the void 28 to pass around part of the control shaft 18.

Whilst specific embodiments of the invention are described hereinbefore, it will be appreciated that a wide range of modifications and alterations may be made thereto without departing from the scope of the invention.

## Claims

1. A butterfly valve comprising a valve disc (16) located within a flow passage (14) provided in a housing (12) and engageable with a seat (22) provided within the housing (12), and **characterised in that** the valve disc (16) and the housing (12) cooperate with one another, when the valve disc (16) occupies a closed position, to define an annular void (28) extending around the periphery of the valve disc (16) at a position spaced from the seat (22), an inlet port (30) and an outlet port (32) communicating with the void (28) to allow the supply of sealant to the void (28) to form a seal between the valve disc (16) and the housing (12).

2. A valve according to Claim 1, wherein the valve disc (16) is supported and moved by a control shaft (18).

3. A valve according to Claim 2, wherein the axis of the control shaft (18) is spaced from a plane containing the void (28).

4. A valve according to Claim 2 or Claim 3, wherein the control shaft (18) is offset from the diameter of the flow passage (14) such that the application of fluid under pressure to the flow passage (14) applies a load to the valve disc (16), when the valve disc (16) approaches its closed position, urging the valve disc (16) towards its closed position.

5. A valve according to Claim 4, wherein the void (28) is designed and positioned such that the action of urging the valve disc (16) towards its closed position pressurises the sealant within the void (28), enhancing the sealing effect provided thereby.

## Patentansprüche

1. Drosselventil, das aufweist: einen Ventilteller (16), der innerhalb eines Strömungskanals (14) angeordnet ist, der in einem Gehäuse (12) vorhanden ist, und der mit einem Sitz (22) in Eingriff kommen kann, der innerhalb des Gehäuses (12) vorhanden ist, und **dadurch gekennzeichnet, dass** der Ventilteller (16) und das Gehäuse (12) zusammenarbeiten, wenn der Ventilteller (16) eine geschlossene Position einnimmt, um einen ringförmigen Hohlraum (28) zu definieren, der sich um den Umfang des Ventiltellers (16) herum in einer Position erstreckt, die vom Sitz (22) beabstandet ist; eine Eintrittsöffnung (30) und eine Austrittsöffnung (32), die mit dem Hohlraum (28) in Verbindung stehen, um die Zufuhr eines Dichtungsmittels zum Hohlraum (28) zu gestatten, um eine Abdichtung zwischen dem Ventilteller (16) und dem Gehäuse (12) zu bewirken.

2. Ventil nach Anspruch 1, bei dem der Ventilteller (16) mittels einer Steuerwelle (18) getragen und bewegt wird.

3. Ventil nach Anspruch 2, bei dem die Achse der Steuerwelle (18) von einer Ebene beabstandet ist, die den Hohlraum (28) enthält.

4. Ventil nach Anspruch 2 oder Anspruch 3, bei dem die Steuerwelle (18) vom Durchmesser des Strömungskanals (14) versetzt ist, so dass die Anwendung von Fluid unter Druck auf den Strömungskanal (14) eine Belastung am Ventilteller (16) anwendet, wenn sich der Ventilteller (16) seiner geschlossenen Position nähert, wobei der Ventilteller (16) in Richtung seiner geschlossenen Position getrieben wird.

5. Ventil nach Anspruch 4, bei dem der Hohlraum (28) so konstruiert und positioniert ist, dass die Wirkung des Treibens des Ventiltellers (16) in Richtung seiner geschlossenen Position das Dichtungsmittel innerhalb des Hohlraumes (28) unter Druck setzt, wodurch der dadurch bewirkte Dichtungseffekt verstärkt wird.

## Revendications

1. Vanne papillon, comprenant un disque de vanne (16) positionné dans un passage d'écoulement (14) agencé dans un logement (12) et pouvant s'engager dans un siège (22) agencé dans le logement (12), et **caractérisée en ce que** le disque de vanne (16) et le logement (12) coopèrent l'un avec l'autre lorsque le disque de vanne (16) occupe une position fermée, pour définir un vide annulaire (28) s'étendant autour de la périphérie du disque de vanne (16) au niveau d'une position espacée du siège (22), un orifice d'entrée (30) ainsi qu'un orifice de sortie (32) communiquant avec le vide (28) pour permettre l'alimentation d'un produit d'étanchéité dans le vide (28) afin de former un joint d'étanchéité entre le disque de vanne (16) et le logement (12).

2. Vanne selon la revendication 1, dans laquelle le disque de la vanne (16) est supporté et déplacé par un arbre de commande (18).

3. Vanne selon la revendication 2, dans laquelle l'axe de l'arbre de commande (18) est espacé d'un plan contenant le vide (28).

4. Vanne selon les revendications 2 ou 3, dans laquelle l'arbre de commande (18) est décalé par rapport au diamètre du passage d'écoulement (14), de sorte que l'application de fluide sous pression dans le passage de fluide (14) applique une charge au disque de vanne (16) lorsque le disque de vanne (16) se rapproche de sa position fermée, poussant le disque de vanne (16) vers sa position fermée.

5. Vanne selon la revendication 4, dans laquelle le vide (28) est conçu et positionné de sorte que l'action de poussée du disque de vanne (16) vers sa position fermée met sous pression le produit d'étanchéité dans le vide (28), améliorant l'effet d'étanchéité ainsi établi.
